# EUROPÄISCHE PATENTSCHRIFT

(11) **EP 0 548 490 B1**
(45) Veröffentlichungstag und Bekanntmachung des Hinweises auf die Patenterteilung: **06.08.1997**
(21) Anmeldenummer: 92117885.1
(22) Anmeldetag: 20.10.1992
(51) Int. Cl.: B01F 13/08

(54) **Elektronische Drehzahlregelung für Laborgeräte, insbesondere Magnetrührer**
Electronic rotation speed control for laboratory apparatus, especially magnetic stirrer
Régulation électronique de la vitesse de rotation pour appareils de laboratoire, notamment mélangeur magnétique

(30) Priorität: 22.10.1991 DE 4134725
(43) Veröffentlichungstag der Anmeldung: 30.06.1993
(73) Patentinhaber: Heidolph-Elektro GmbH & Co. KG, D-93309 Kelheim (DE)
(72) Erfinder: Weissenberger, Wolfgang, W-8428 Rohr (DE); Rödel, Reinhold, W-8428 Rohr (DE)
(74) Vertreter: Göbel, Matthias, Dipl.-Ing.

(56) Entgegenhaltungen:
- EP-A- 0 338 267
- DE-A- 3 322 409
- DE-U- 9 107 498
- PATENT ABSTRACTS OF JAPAN vol. 12, no. 26 (E-577)(2873) 26. Januar 1988

## Beschreibung

Elektronische Drehzahlregelung für Laborgeräte, insbesondere Magnetrührer, mit einer magnetischen Kupplung.

Die Erfindung betrifft eine elektronische Drehzahlregelung für Laborgeräte, insbesondere Magnetrührer, mit einer magnetischen Kupplung zwischen einem durch einen Elektromotor im Abstand zum Rührbehälter drehbewegbaren Magneten und einem im Rührbehälter frei bewegbaren magnetischen Rührstab sowie einer auf Magnetfeldänderungen ansprechenden Sonde, die mit einer Regelelektronik verbunden ist.

Beim Magnetrührer der DE-A-3 322 409 sind Maßnahmen zur Überwachung der magnetischen Koppelung zwischen einer durch einen Elektromotor drehbaren Magnetplatte und einem im Rührgefäß untergebrachten magnetischen Rührstab vermittels eines auf Magnetfeldänderungen der beiden Magnete ansprechenden Sensors vorgesehen, dessen Ausgangssignal einer Anzeigebaugruppe zuführbar ist. Abgesehen davon, daß der Sensor ungeeignet ist Signale zu einer Drehzahlregelung zu vermitteln, benötigt der Magnetrührer zum Zwecke einer Drehzahlregelung einen Regler mit zusätzlichem Sensor, z.B. Reflexlichtschranke. Magnetische Drehzahlsensoren sind als solche bereits durch die DE-A-3433060 und EP-A-0 412017 bekannt.

Es ist Aufgabe der Erfindung eine sicher arbeitende elektronische Regelung für Magnetrührer mit einfacher Ausgestaltung zu schaffen.

Der Erfindung gemäß wird diese Aufgabe dadurch gelöst, daß die durch den Elektromotor drehbare Magnetplatte außerhalb des Gerätegehäuses ausgebildet ist und auf der dem Rührstäbchen abgewandten Seite der Magnetplatte innerhalb des Gerätegehäuses ein durch die Magnetfeldlinien der Magnetplatte beeinflußbarer magnetfeldempfindlicher Sensor zur Abtastung der Winkelgeschwindigkeit der Magnetplatte angeordnet ist und der Abtastwert als die zur Regelung notwendige Funktion der Drehzahlistwerterfassung dient. Hierdurch ergibt sich eine berührungslose Erkennung der Drehbewegung, die zu einer Regelcharakteristik gegenüber der bekannten Stellcharakteristik und stabilen Drehzahlen bei Temperatur-, Belastungs- und Spannungsschwankungen führt. Außerdem ist eine Leerlaufjustage (Justage der Maximaldrehzahl ohne Nennlastvorgabe) einfach vorzunehmen sowie ein verbessertes Laufverhalten erreichbar. Schließlich ist auch eine liniare Sollwertvorgabe und damit ein besseres Bedienverhalten erzielbar. Letztlich kann auf mechanische Zu-satzeinrichtungen, z.B. Schwungmassen, wie sie bei Phasenanschnittssteuerungen oder anderweitigen Steuerungen allgemein erforderlich sind, ebenso wie auf die sonst üblichen Drehzahlmeßeinrichtungen, z.B. Tachogeneratoren oder optischen Abtastungen verzichtet werden.

Bevorzugt ist der magnetfeldempfindliche Sensor als ein hochsensibles magnetfeldempfindliches Bauteil ausgebildet. Durch die Anordnung des Sensors im Gerätegehäuse erübrigen sich Gerätegehäusedurchführungen, z.B. Kabel, die Abdichtungsprobleme und Zusatzkosten ergeben.

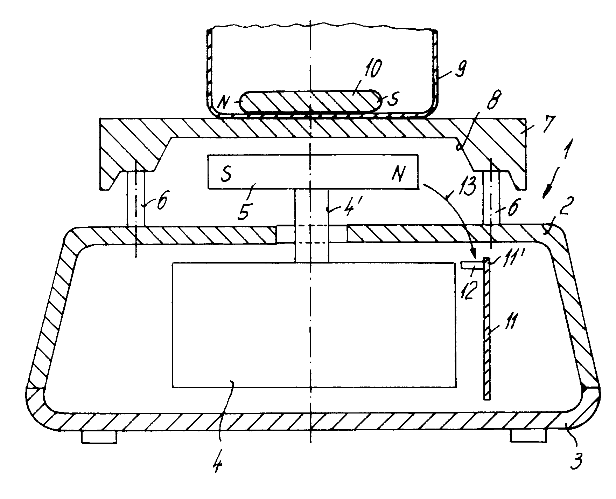

Die Erfindung ist anhand eines Ausführungsbeispiels in der Zeichnung verdeutlicht.

Mit 1 ist ein Gerätegehäuse bezeichnet, das durch einen Gehäuseoberteil 2 und einen mit diesem verbundenen Gehäuseunterteil 3 gebildet ist. Das Gerätegehäuse 1 nimmt einen Elektromotor 4 auf, auf dessen Welle 4' eine Magnetplatte 5 fest aufgesetzt ist. Weiter trägt das Gerätegehäuse 1 vermittels Stiften 6 eine Heizplatte 7, die eine Einziehung 8 aufweist, in die die Magnetplatte 5 eintaucht. Die Heizplatte 7 dient als Träger eines Rührbehälters 9, in dem ein Rührstäbchen 10 frei eingelegt ist. Das Rührstäbchen 10 ist ebenso wie die Magnetplatte 5 aus einem permanentmagnetischen Werkstoff gebildet.

Im Gerätegehäuse 1 ist weiter, z.B. eine Leiterplatte 11 als Träger einer elektronischen Regelelektronik (nicht gezeigt) eingestellt, die mit dem der Magnetplatte 5 zugenäherten Bereich 11' einen hochsensiblen magnetfeldempfindlichen Sensor 12 fest trägt.

Bei Drehungen der Welle 4' und Umläufen der Magnetplatte 5 wird das im Rührbehälter 9 befindliche Rührstäbchen 10 mitbewegt und über die Magnetfeldlinien 13 erfolgt durch den magnetfeldempfindlichen Sensor 12 eine Abtastung der Winkelgeschwindigkeit der Magnetplatte 5. Die so erzielten Abtastwerte werden für die zu Regelungen notwendigen Funktionen der Drehzahlistwerterfassung von der Regelelektronik verarbeitet.

## Patentansprüche

1. Elektrische Drehzahlregelung für Laborgeräte, insbesondere Magnetrührer, mit einer magnetischen Kupplung zwischen einem durch einen Elektromotor im Abstand zum Rührbehälter drehbewegbaren Magneten und einem im Rührbehälter frei bewegbaren magnetischen Rührstab sowie einer auf Magnetfeldänderungen ansprechenden Sonde, die mit einer Regelelektronik verbunden ist, dadurch gekennzeichnet, daß
a) der drehbewegbare Magnet als Magnetplatte (5) ausgebildet ist, und
b) die durch den Elektromotor (4) drehbare Magnetplatte (5) außerhalb des Gerätegehäuses (1) ausgebildet ist und auf der dem Rührstäbchen (10) abgewandten Seite der Magnetplatte (5) innerhalb des Gerätegehäuses (1) ein durch die Magnetfeldlinien der Magnetplatte (5) beeinflußbarer magnetfeldempfindlicher Sensor (12) zur Abtastung der Winkelgeschwindigkeit der Magnetplatte (5) angeordnet ist und
c) der Abtastwert als die zur Regelung notwendige Funktion der Drehzahlistwerterfassung dient.

2. Drehzahlregelung nach Anspruch 1, dadurch gekennzeichnet, daß der magnetfeldempfindliche Sensor (12) als hochsensibles magnetfeldmpfindliches Bauteil ausgebildet ist.

## Claims

1. Electrical speed control for laboratory equipment, more especially magnetic stirrers, having a magnetic coupling between a magnet, which is rotatably displaceable by an electric motor at a spacing from the agitator vessel, and a magnetic stirring rod, which is freely displaceable in the agitator vessel, as well as a probe, which responds to changes in the magnetic field and is connected to an electronic control unit, characterised in that
a) the rotatably displaceable magnet is configured as a magnetic disc (5), and
b) the magnetic disc (5), which is rotatable by the electric motor (4), is provided externally of the apparatus housing (1), and a sensor (12), which can be influenced by the magnetic field lines of the magnetic disc (5) and is sensitive to the magnetic field, is disposed on the side of the magnetic disc (5) remote from the small stirring rod (10) internally of the apparatus housing (1) to scan the angular speed of the magnetic disc (5), and
c) the scanning value serves as the function of the means for detecting the actual speed value, such function being required for control purposes.

2. Speed control according to claim 1, characterised in that the sensor (12), which is sensitive to the magnetic field, is configured as a highly sensitive component part which is sensitive to the magnetic field.

## Revendications

1. Régulateur de vitesse électrique pour des appareils de laboratoire, en particulier des agitateurs magnétiques, comportant un couplage magnétique entre un aimant pouvant être animé d'un mouvement rotatif par un moteur électrique à distance par rapport au récipient d'agitation et un barreau d'agitation magnétique librement mobile dans le récipient d'agitation, ainsi qu'une sonde sensible à des modifications du champ magnétique, qui est reliée à une électronique de réglage,
caractérisé en ce que :
a) l'aimant mobile en rotation est réalisé sous forme de plaque magnétique (5), et
b) la plaque magnétique (5) entraînée en rotation par le moteur électrique (4) est réalisée à l'extérieur du boîtier (1) de l'appareil et, sur le côté, opposé au barreau d'agitation (10), de la plaque magnétique (5), il est agencé, à l'intérieur du boîtier (1) de l'appareil, un capteur (12), sensible au champ magnétique et pouvant être influencé par les lignes de champ magnétique de la plaque magnétique (5), pour détecter la vitesse angulaire de la plaque magnétique (5), et
c) la valeur détectée sert comme la fonction, nécessaire pour le réglage, de la détection de la valeur réelle de vitesse.

2. Régulateur de vitesse selon la revendication 1,
caractérisé en ce que le capteur (12) sensible au champ magnétique est réalisé comme pièce sensible au champ magnétique, très sensible.
